# EUROPEAN PATENT APPLICATION

(11) **EP 1 622 156 A2**
(43) Date of publication of application: **01.02.2006**
(21) Application number: 05014848.5
(22) Date of filing: 08.07.2005
(51) Int. Cl.: G11B 33/04

(54) **Disk storage unit**

(30) Priority: 27.07.2004 JP 2004218563
(71) Applicant: FUJI PHOTO FILM CO., LTD, Kanagawa-ken (JP)
(72) Inventor: Ikegami, Akihiko, Minato-ku Tokyo (JP); Taga, Kazuaki, Minato-ku Tokyo (JP)
(74) Representative: Klunker . Schmitt-Nilson . Hirsch

(57) **Abstract**

A disk storage unit (U) that houses a plurality of sheet-like protective sleeves (11), each for storing a disk (10), enables storage of a great number of recording media disks, such as CD's, in a limited space. An edge (11b) of each of the plurality of protective sleeves (11) is removably attached to a case (1), by means of an adhesive, which can be peeled off, for example.

## Description

### BACKGROUND OF THE INVENTION

### Field of the Invention

The present invention relates to a disk storage unit, and particularly to a disk storage unit for storing recording media disks, such as CD's and DVD's.

### Description of the Related Art

A conventional CD storage case which is commonly in use (hereinafter, referred to as "standard case") comprises: a case main body, of which the entirety of one side is an open surface, for storing a disk; and a lid, which is linked to the case main body by a hinge so as to open and close the open surface. A circular disk clamper, for elastically engaging a central aperture of the disk to detachably hold the disk, is provided at the central portion of the inner surface of the case main body.

However, the standard case is capable of holding only a single disk therein. Therefore, a problem is arising in that as the number of disks increases, storage space is difficult to secure.

In response to this problem, pluralities of disks are stored in sheet-like protective sleeves made of nonwoven cloth, paper, plastic and the like, which are then stored within a single case. Thereby, space is saved and the cost of the case is reduced. However, if the number of disks further increases, the presence of the case becomes a barrier to space efficiency.

### SUMMARY OF THE INVENTION

The present invention has been developed in view of the above circumstances. It is an object of the present invention to provide a disk storage unit, which is capable of storing a great number of disks within a limited space.

The disk storage unit of the present invention comprises:
a case; and
a plurality of sheet-like protective sleeves, each for storing a disk therein; characterized by:
   each of the protective sleeves being removably attached to the case at one of the edges thereof.

The manner in which the protective sleeves are removably attached to the case may be by: adhesive, which is capable of being peeled off; tearable perforations provided in the protective sleeves; or in a manner such that the protective sleeves can be cut away with scissors.

An opening may be provided from the edge of each protective sleeve to the central portion of a disk stored therein. In this case, it is preferable that the opening extends diagonally from the corner of the protective sleeve.

According to the disk storage unit of the present invention, the plurality of protective sleeves are stored within the case in a removable manner. Therefore, in the case that the number of disks increases, the disks can be removed from the case along with the protective sleeves and organized in a filing implement. Thereby, storage of a great number of disks in a limited space is enabled, as well as organization and filing of the disks according to users' tastes.

An opening may be provided from the edge of each protective sleeve to the central portion of a disk stored therein. In this case, removal of the disks from the protective sleeves is facilitated.

### BRIEF DESCRIPTION OF THE DRAWINGS

Figure 1 is a perspective view of an embodiment of the disk storage unit of the present invention, in a closed state.
Figure 2 is a plan view of a protective sleeve, which is stored within a case illustrated in Figure 1, holding a disk therein.
Figure 3 is a plan view that illustrates the state in which the disk is removed from the protective sleeve of Figure 2.
Figure 4 is a perspective view of the disk storage unit of Figure 1, in an open state.
Figure 5 is a perspective view that illustrates a state in which the protective sleeve is removed from the case in the state illustrated in Figure 4.
Figure 6 is a perspective view that illustrates a state in which the protective sleeve is filed within a binder.
Figure 7 is a plan view that illustrates an alternate embodiment of the protective sleeve.
Figure 8 is a plan view that illustrates another alternate embodiment of the protective sleeve.
Figure 9 is a plan view that illustrates an alternate embodiment of the protective sleeve of Figure 8.

### DESCRIPTION OF THE PREFERRED EMBODIMENTS

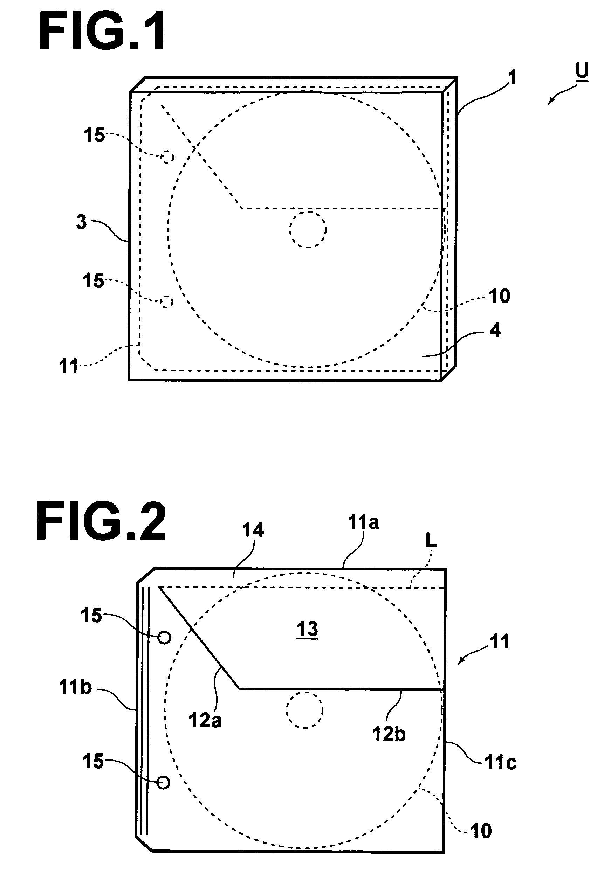

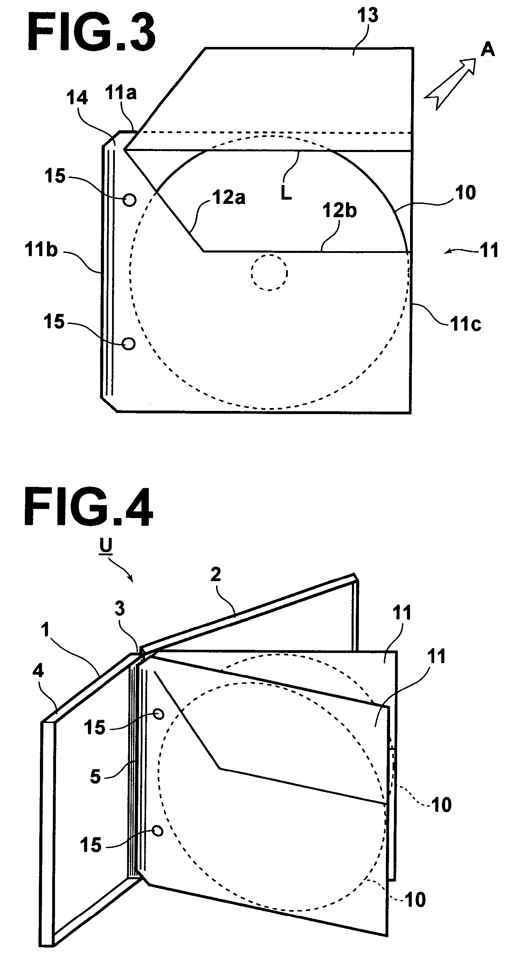

Figure 1 is a perspective view of an embodiment of the disk storage unit of the present invention, in a closed state. Figure 2 is a plan view of a protective sleeve, which is stored within a case illustrated in Figure 1, holding a disk therein. Figure 3 is a plan view that illustrates the state in which the disk is removed from the protective sleeve of Figure 2. Figure 4 is a perspective view of the disk storage unit of Figure 1, in an open state.

As illustrated in Figure 1 and Figure 4, the disk storage unit U comprises a case 1, constituted by: a substantially square case main body 2; and a lid 4, which is linked to an edge of the case main body 2 via a spine portion 3 so as to be openable and closable. The inner surface of the spine portion 3 forms a protective sleeve attaching portion 5 (refer to Figure 4). The two substantially parallel edges of the spine portion 3 constitute hinges of the case main body 2 and the lid 4. A plurality of sheet-like protective sleeves 11, such as that illustrated in Figure 2, each storing a disk 10 therein, are housed within the case 1.

The protective sleeves 11 storing the disks 10 therein are formed as substantially square sheets of nonwoven cloth. Each protective sleeve 11 comprises: an upper edge 11a, a side edge 11b, in which apertures 15, 15 to be described later are provided, a side edge 11c opposite the side edge 11b, and a lower edge.

A linear cut 12a that extends toward the center of the protective sleeve 11 from the vicinity of the upper edge 11a and the side edge 11b is formed in the front side of the protective sleeve 11. A cut 12b that extends from the tip of the cut 12a to the side edge 11c in a line substantially parallel to the upper edge 11a is formed continuously with the cut 12a. Further, the upper portion of the side edge 11c is cut open. An upwardly opening trap door lid 13 that exposes the upper portion of the disk 10 is formed by the cuts 12a, 12b, and the cut open upper portion of the side edge 11c. The trap door lid 13 is opened by bending along a bend line L, which is parallel to the upper edge 11a. A narrow band-like region 14 is formed between the upper edge 11a of the protective sleeve 11 and the bend line L. The band-like region 14 slightly overlaps the upper end of the disk 10.

When removing the disk 10 from the protective sleeve 11, first, the trap door lid 13 is opened as illustrated in Figure 3. Next, the lid 13 is pulled upward and backward toward the rear side of the protective sleeve 11, to move the region 14 from the front side of the disk 10 to the rear side thereof, thereby exposing the upper end of the disk 10. Then, the upper end of the disk 10 is gripped with fingers and pulled diagonally upward toward the right, in the direction of arrow A of Figure 3. That is, the disk 10 is pulled toward the corner between the upper edge 11a and the side edge 11c, to remove the disk 10 from the protective sleeve 11.

Two apertures 15, 15 (punched apertures) are formed in the vicinity of the side edge 11b, with a predetermined interval therebetween. The apertures 15, 15 enable the protective sleeve 11 to be filed in a binding filing implement (binder). The side edge 11b is attached to the protective sleeve attaching portion 5 at the inner surface of the spine portion 3 via an adhesive, as illustrated in Figure 4.

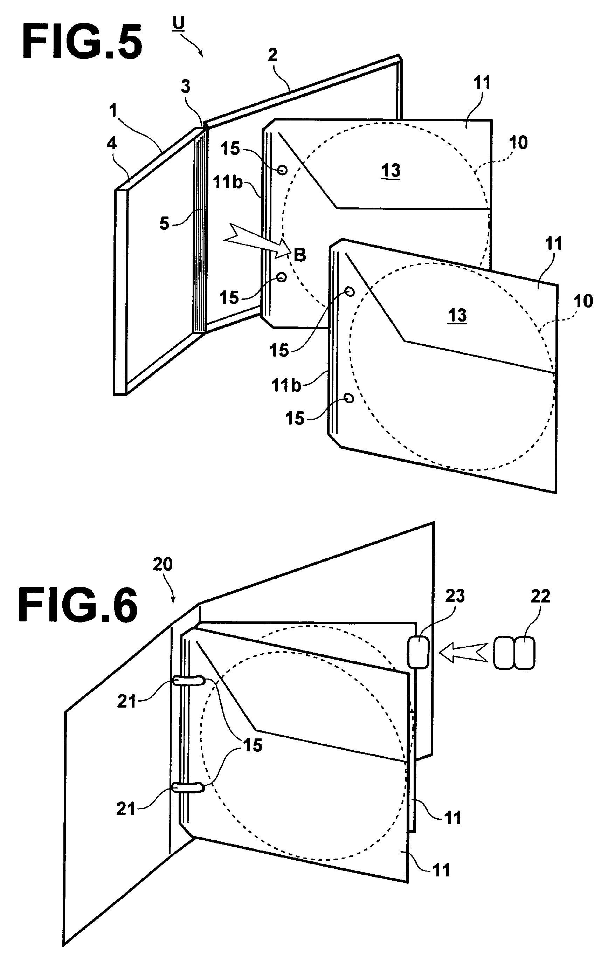

Accordingly, the protective sleeve 11 can be removed from the case 1, by pulling the protective sleeve 11 in the direction indicated by arrow B of Figure 5, to peel the side edge 11b off of the protective sleeve attaching portion 5.

The protective sleeve 11, which has been removed from the case 1 and which stores a disk 10 therein, can be filed into a commercially available binder 20, by feeding rings 21, 21 through the apertures 15, 15, as illustrated in Figure 6. In this case, commercially available labels 22 may be employed to attach tags 23 on to the protective sleeves 11.

In this manner, according to the present embodiment, a plurality of protective sleeves 11 are housed within the case 1 in a removable manner. In addition, the protective sleeves 11 are provided with the apertures 15, which enable filing within the binder 20. Therefore, in the case that the number of disks 10 increases, the disks 10 can be removed from the case 1 along with the protective sleeves 11, and filed in the binder 20. Thereby, storage of a great number of disks 10 within a limited space is enabled. Another advantageous effect, in that classification and filing according to users' tastes is enabled, is also obtained.

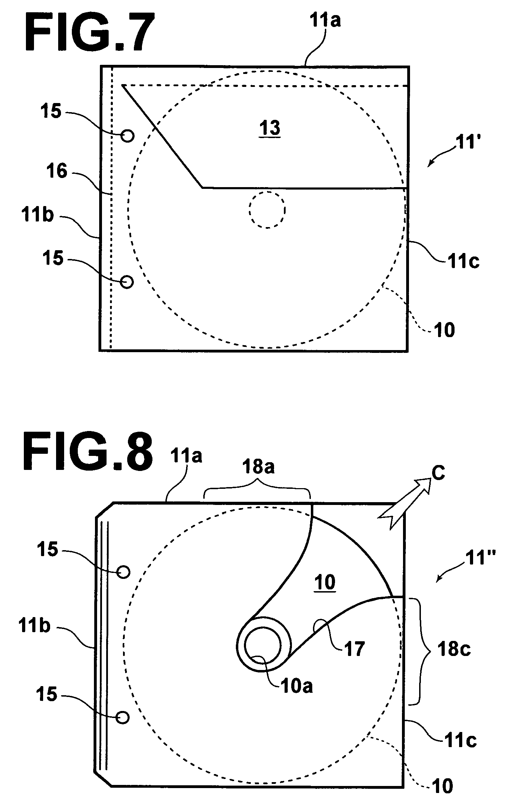

Note that in the embodiment described above, the side edge 11b of the protective sleeve 11 is removably attached to the case 1 with an adhesive. Alternatively, the side edge 11b of a protective sleeve 11' may be permanently attached to the case 1, while providing perforations 16 parallel to the side edge 11b in the vicinity thereof, as illustrated in Figure 7. The case 1 and the protective sleeve 11' may be separated by tearing along the perforations 16 as necessary. As a further alternative, the perforations 16 need not be provided, and the portion in the vicinity of the side edge 11b may be cut with scissors or the like.

In addition, in the embodiment described above, the apertures 15, 15 are provided to enable filing of the protective sleeves 11 in the binder 20. However, the apertures 15, 15 need not be provided, and the protective sleeves 11 may be bound in a filing implement by being sandwiched therein or the like.

Figure 8 is a plan view that illustrates an alternate embodiment of the protective sleeve. The front side of a protective sleeve 11" is provided with an opening 17 that extends from the corner between the side edge 11c and the upper edge 11a toward the central portion of the disk 10. The side edge 11c is opposite the side edge 11b which is removably attached to the case 1. A central aperture 10a of the disk 10 is exposed through the opening 17. In addition, the upper edge 11a and the side edge 11c are cut open from the edges of the opening 17 through the ranges denoted by 18a and 18c, respectively. This construction enables a finger to be inserted into the central aperture 10a of the disk 10, to draw the disk 10 out diagonally upward in the direction indicated by arrow C.

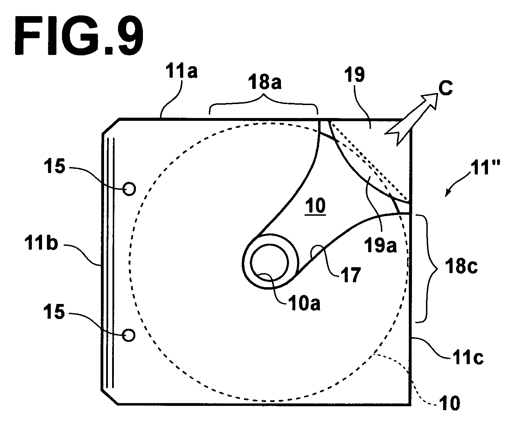

Note that in this case, a bag portion 19 having a region 19 that slightly overlaps an edge of the disk 10 may be provided at the corner between the side edge 11c and the upper edge 11a, as illustrated in Figure 9. Thereby, inadvertent removal of the disk 10 from the protective sleeve 11" can be prevented. In this case also, the bag portion 19 can be pulled upward and backward toward the rear side of the protective sleeve 11", to move the region 19 from the front side of the disk 10 to the rear side thereof, thereby exposing the upper right end of the disk 10. Then, the disk can be drawn out in the upper right direction indicated by arrow C.

## Claims

1. A disk storage unit (U), comprising:
a case (1); and
a plurality of sheet-like protective sleeves (11, 11', 11"), each for storing a disk (10) therein; **characterized by**:
each of the protective sleeves (11, 11', 11") being removably attached to the case (1) at one of the edges (11b) thereof.

2. A disk storage unit (U) as defined in Claim 1, wherein:
the protective sleeves (11) are removably attached to the case (1) with adhesive, which is capable of being peeled off.

3. A disk storage unit (U) as defined in Claim 1, wherein:
the protective sleeves (11') are removably attached to the case (1) by means of tearable perforations (16) provided in the protective sleeves (11').

4. A disk storage unit (U) as defined in Claim 1, wherein:
the protective sleeves (11') are removably attached to the case (1) in a manner such that they may be cut away from the case (1) with scissors.

5. A disk storage unit (U) as defined in Claim 1, wherein:
the protective sleeves (11") are provided with openings (17) that extend from the edges thereof to the centers of the disks (10) stored therein.

6. A disk storage unit (U) as defined in Claim 5, wherein:
the openings (17) extend diagonally from the corners of the protective sleeves (11").
